# EUROPEAN PATENT APPLICATION

(11) **EP 3 753 811 A1**
(43) Date of publication of application: **23.12.2020**
(21) Application number: 20162280.0
(22) Date of filing: 11.03.2020
(51) Int. Cl.: B62D 21/15, B62D 25/02, B62D 25/04, B62D 25/06, B62D 29/00, B62D 27/02

(54) **VEHICLE-BODY STRUCTURE FOR VEHICLE, AND VEHICLE**

(30) Priority: 18.06.2019 JP 2019112727
(71) Applicant: Mazda Motor Corporation, Hiroshima 730-8670 (JP)
(72) Inventor: KIYOSHITA, Daisuke, Fuchu-cho, Aki-gun,, Hiroshima 730-8670 (JP); NISHIMURA, Yoshikazu, Fuchu-cho, Aki-gun,, Hiroshima 730-8670 (JP); NAKAMURA, Takeshi, Fuchu-cho, Aki-gun,, Hiroshima 730-8670 (JP)
(74) Representative: Müller-Boré & Partner Patentanwälte PartG mbB

(57) **Abstract**

In a closed cross-sectional space 2s included in a roof rail 2 extending along a side part of a roof portion 20 of a vehicle, a deformation suppression member 5 is provided. The deformation suppression member 5 suppresses a change in shape of the roof rail 2 in cross section perpendicular to a longitudinal direction of the roof rail 2 by coming into press-contact with a surface of the roof rail 2, which defines the closed cross-sectional space 2s. The deformation suppression member 5 is provided to extend forward and rearward relative to a front edge 32a of a joined portion C3r of the roof rail 2 with a rear-side roof reinforcement 3r in a longitudinal direction of the roof rail 2 within a region between a rear edge 32b of the joined portion C3r and a front edge 45f of a joined portion C4 of the roof rail 2 with an intermediate pillar 4.

## Description

### BACKGROUND OF THE INVENTION

### Field of the Invention

The present invention relates to a vehicle-body structure for a vehicle, and a vehicle. The present invention particularly relates to an upper vehicle-body structure for a vehicle, including for example, a roof rail included in a vehicle-body upper side part so as to constitute a side part of a roof of the vehicle, the roof rail having an internal space defined therein, the internal space extending in a generally vehicle front-rear direction, a first pillar extending downward from the roof rail, for example, a center pillar, a second pillar extending downward from the roof rail at a rearward position relative to the first pillar, for example, an intermediate pillar, and a roof reinforcement extending from the roof rail toward a vehicle-width-direction inner side at a rearward position relative to the first pillar.

### Description of the Related Art

As exemplified in Japanese Patent Laid-Open No. 2009-57032, a vehicle body upper structure has been commonly known as providing a solution to a roof rail in order to suppress deformation of the roof rail caused by a vehicle-width-direction inner side load applied to a center pillar at the time of a collision of the side of the vehicle (hereinafter, referred to as "side collision"), and then transmitted to the roof rail.

Meanwhile, for example, a joined portion of the roof rail with a roof reinforcement extending toward the vehicle-width-direction inner side at a rearward position relative to the center pillar (hereinafter, referred to as "rear-side roof reinforcement") may receive an input of not only the load transmitted rearward from a joined portion of the roof rail with the center pillar at the time of a side collision, but also the load transmitted from an intermediate pillar positioned rearward relative to the center pillar through a joined portion of the roof rail with the intermediate pillar in some cases.

While the joined portion of the roof rail with the rear-side roof reinforcement is supported by this rear-side roof reinforcement from the vehicle-width-direction inner side, a portion of the roof rail, which is immediately in front of the above joined portion, is not supported by the rear-side roof reinforcement. Thus, at the time of a side collision, due to the difference in rigidity between the above joined portion and a portion immediately in front of this joined portion, a stress is more likely to become concentrated on a front edge of the above joined portion, which is positioned between these portions. For this reason, there is an increased need for providing a solution to cross-sectional deformation of the roof rail in the vicinity of the front edge of the above joined portion.

However, in the vehicle body upper structure disclosed in Japanese Patent Laid-Open No. 2009-57032, a roof side rail (11) serving as a roof rail is reinforced by disposing a long reinforcement pipe (23) in the interior of the roof side rail (11). The reinforcement pipe (23) not only extends in the vicinity of the front edge of a joined portion of the roof side rail (11) with a rear-side roof reinforcement (16), but also extends continuously in the vehicle-body front-rear direction from the rear relative to the rear-side roof reinforcement (16) to the front relative to a center pillar (13). There is thus a concern about an increase in weight of the roof side rail (11).

### SUMMARY OF THE INVENTION

The present invention has been made in view of the above problems, and an object of the present invention is to suppress breakage of a roof rail at its joined portion with a roof rail reinforcement caused by a vehicle-width-direction inner side load applied to a first pillar such as a center pillar at the time of a side collision, while minimizing an increase in weight of the roof rail.

The invention is defined in claim 1. Preferred embodiments are defined in dependent claims.

Particularly, an aspect of the present invention is a vehicle-body structure or an upper vehicle-body structure for a vehicle, the structure including: a roof rail included in a vehicle-body upper side part so as to constitute a side part of a roof of the vehicle, the roof rail having an internal space defined therein, the internal space extending in a generally vehicle front-rear direction; a first pillar extending downward from the roof rail; a second pillar extending downward from the roof rail at a rearward position relative to the first pillar; and a roof reinforcement extending from the roof rail toward a vehicle-width-direction inner side at a rearward position relative to the first pillar, wherein the vehicle-body structure or the upper vehicle-body structure includes, in the internal space, a deformation suppression member that suppresses a change in shape of the roof rail in cross section perpendicular to a longitudinal direction of the roof rail by coming into press-contact with a surface of the roof rail, the surface defining the internal space, and in a longitudinal direction of the roof rail, between a rear edge of a connection portion of the roof rail with the roof reinforcement and a front edge of a connection portion of the roof rail with the second pillar, the deformation suppression member is provided over a region extending forward and rearward relative to a front edge of the connection portion of the roof rail with the roof reinforcement.

According to the above configuration, the vehicle-body structure or the upper vehicle-body structure for a vehicle can suppress breakage of the roof rail at its connection or joined portion with the roof rail reinforcement caused by a vehicle-width-direction inner side load applied to the first pillar extending downward from the roof rail, such as a center pillar, at the time of a side collision, while minimizing an increase in weight of the roof rail.

Particularly, a high-rigidity foamed element that is foamed by heat may be employed as the deformation suppression member.

According to the above configuration, the high-rigidity foamed element can be foamed by heat used in a process of drying a painting agent painted on a vehicle-body surface, such that the high-rigidity foamed element comes into press-contact with a surface of the roof rail, which defines the internal space.

Further particularly, the connection or joined portion of the roof rail with the roof reinforcement may align with the connection or joined portion of the roof rail with the second pillar at least partially in a longitudinal direction of the roof rail. Further particularly, a vehicle body may be provided with a plurality of closed cross-sectional members having therein closed cross-sectional spaces respectively. Further particularly, at least partially in and/or around a section where the connection or joined portion of the roof rail with the roof reinforcement aligns with the connection or joined portion of the roof rail with the second pillar in a vehicle-body front-rear direction, an annular structure is made up of the closed cross-sectional members disposed so as to annularly surround a vehicle-interior space when viewed from front of the vehicle body. Further particularly, the roof rail, the roof reinforcement, and the second pillar may be included in the closed cross-sectional members, and respectively have the closed-cross sectional spaces defined therein. Further particularly, the deformation suppression member may be provided in or in a vicinity of a section of the roof rail, the section constituting a part of the annular structure.

According to the above configuration, the deformation suppression member is provided in or in the vicinity of a section of the roof rail in the longitudinal direction, which constitutes a part of the annular structure, so that at the time of a side collision, the deformation suppression member can suppress cross-sectional deformation at the section of the roof rail in the longitudinal direction, and also load transmission from the second pillar through the deformation suppression member to the roof reinforcement can be effectively improved, and consequently this can contribute to improvement in rigidity of the annular structure.

Further particularly, the second pillar may include a second-pillar outer panel in a connection or joined portion with the roof rail at least from a front edge to a rear edge of the deformation suppression member on a vehicle-width-direction outer side relative to the deformation suppression member.

According to the above configuration, the deformation suppression member in its entirety in the vehicle front-rear direction can be provided on the vehicle-width-direction inner side relative to the second-pillar outer panel. Therefore, at the time of a side collision, for example, when a load input to the first pillar and transmitted from a door impact bar of a rear side door to the second pillar (second-pillar outer panel) is then input toward the vehicle-width-direction inner side relative to the connection or joined portion of the roof rail with the second pillar, this load can be received by the deformation suppression member in its entirety in the vehicle front-rear direction. The deformation suppression member can thus suppress cross-sectional deformation of the roof rail at its connection or joined portion with the second pillar.

Further particularly, the roof rail may include a front-side roof-rail constituent member, and a rear-side roof-rail constituent member with a front edge thereof connected to a rear edge of the front-side roof-rail constituent member, and the vehicle-body structure or the upper vehicle-body structure may include the deformation suppression member at a position corresponding to a connection portion of the front-side and rear-side roof-rail constituent members in a longitudinal direction of the roof rail such that the deformation suppression member extends across the connection or joined portion in a vehicle front-rear direction.

According to the above configuration, the deformation suppression member is disposed so as to extend across the connection or joined portion of the front-side and rear-side roof-rail constituent members in the vehicle front-rear direction, so that the deformation suppression member can come into press-contact with an inner surface of the roof rail, which defines the internal space, such that the end portions of the front-side and rear-side roof-rail constituent members overlap one another in the connection or joined portion. Thus, efficiency in transmitting and dispersing a side-collision load between the front-side and rear-side roof-rail constituent members can be improved, while deformation of the internal space at the connection or joined portion in the longitudinal direction of the roof rail is suppressed.

Note that the roof rail is divided into, and made up of, at least the front-side and rear-side roof-rail constituent members, so that between the front-side and rear-side roof-rail constituent members and a constituent member opposed to these roof-rail constituent members in the vehicle width direction so as to define therein a space, an adequate number of joining spots for spot welding or the like are secured, while the joining spots are provided at appropriate places, and then the front-side and rear-side roof-rail constituent members can be joined to the opposed constituent member.

Owing to this configuration, the roof-rail constituent members can be more firmly joined to another roof-rail constituent member opposed to these roof-rail constituent members in the vehicle width direction, as compared to the case where the roof rail is formed of a single member along the vehicle front-rear direction.

Note that, for example, at least either one of a roof-rail inner panel and a roof-rail outer panel can be employed as the roof-rail constituent members.

Further particularly, a vehicle includes the above vehicle-body structure or upper vehicle-body structure. Advantageous Effects of Invention

The present invention can suppress breakage of the roof rail at its connection or joined portion with the roof rail reinforcement caused by a vehicle-width-direction inner side load applied to the first pillar such as the center pillar at the time of a side collision, while minimizing an increase in weight of the roof rail.

### BRIEF DESCRIPTION OF THE DRAWINGS

FIG. 1 is a perspective view of relevant parts of a vehicle including a vehicle-body structure or an upper vehicle-body structure according to an embodiment of the present invention when viewed from the front and the right side of the vehicle body;
FIG. 2 is an enlarged cross-sectional view of the relevant parts taken along the line A-A in FIG. 1;
FIG. 3 is a perspective view of respective joined portions of a roof rail with an intermediate pillar and with a roof reinforcement, and around the joined portions when viewed from above with a roof rail outer removed;
FIG. 4 is a perspective view with an intermediate-pillar outer panel in FIG. 3 removed;
FIG. 5 is a perspective view of the respective joined portions of the roof rail with the intermediate pillar and with the roof reinforcement, and around the joined portions when viewed from below;
FIG. 6(A) is a vertical cross-sectional view of the relevant parts of the vehicle including the vehicle-body structure or the upper vehicle-body structure according to the present embodiment when viewed from the vehicle-width-direction inner side; and
FIG. 6(B) is a cross-sectional view taken along the line B-B in FIG. 6(A).

### DETAILED DESCRIPTION OF THE EMBODIMENT

An embodiment of the present invention is described below in detail with reference to the drawings.

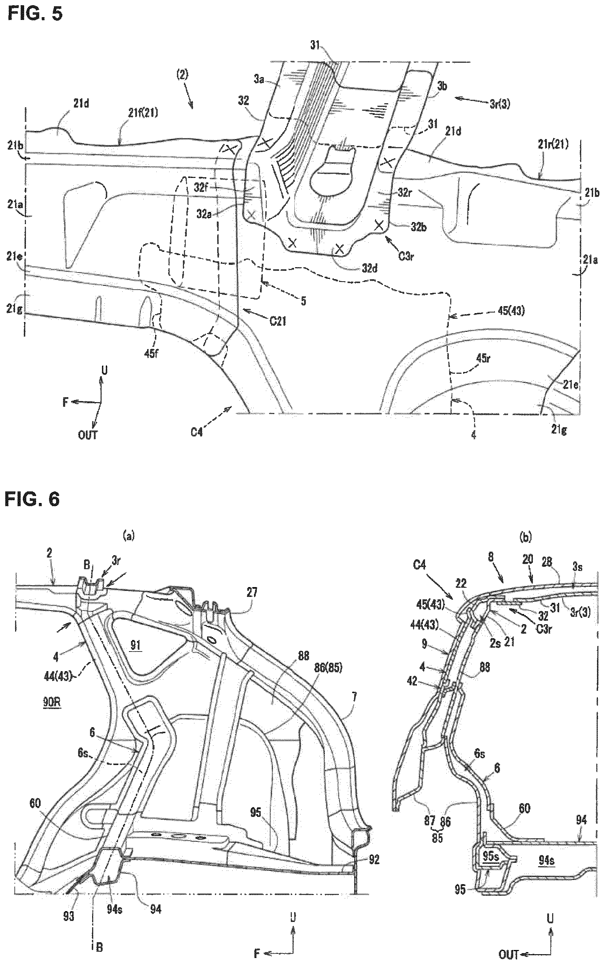

In the drawings, the arrow F, the arrow U, and the arrow OUT illustrate a vehicle front direction, a vehicle upper direction, and a vehicle-width-direction outer side (the right side of the vehicle), respectively. While FIG. 6(B) is a cross-sectional view taken along the line B-B in FIG. 6(A), only FIG. 6(B) illustrates a roof panel 28. Note that a side vehicle-body structure according to the present embodiment described below is provided approximately symmetrically on both the right and left sides of the vehicle. In the following descriptions, the vehicle-width-direction outer side is referred to as "vehicle-width outer side," and the vehicle-width-direction inner side is referred to as "vehicle-width inner side."

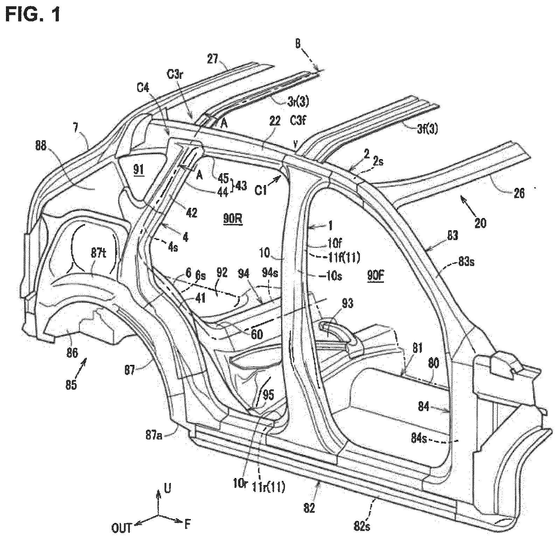

FIG. 1 is a perspective view of relevant parts of a vehicle including a vehicle-body structure or an upper vehicle-body structure according to the present embodiment when viewed from the front and the right side of the vehicle body.

As illustrated in FIG. 1, in the vehicle according to the present embodiment, a tunnel portion 80 extending in the vehicle front-rear direction at the vehicle-body lower part is particularly formed together with a floor panel 81 into a single piece, or is formed integrally with the floor panel 81. At both the right and left end portions of the floor panel 81, a side sill 82 (only illustrated on the right side of the vehicle in FIG. 1) extending in the vehicle front-rear direction is provided. At both the right and left side edges of a roof portion 20 of the vehicle, a roof rail 2 extending generally in the vehicle front-rear direction along each of these side edges (hereinafter, also referred to as "roof side rail") is provided.

The side sill 82 and the roof rail 2 are both closed cross-sectional members (vehicle-body rigid members) respectively having a closed cross-sectional space 82s and a closed cross-sectional space 2s extending in their longitudinal direction (the vehicle front-rear direction).

Respective front edges of the side sill 82 and the roof rail 2 are connected by a front pillar 83 and a hinge pillar 84 that both extend in the up-down direction. The front pillar 83 extends obliquely downward to the front, and the rear upper end of the front pillar 83 is joined or welded to the front edge of the roof rail 2. The hinge pillar 84 extends generally in the vertical direction. The upper end of the hinge pillar 84 is joined or welded to the front lower end of the front pillar 83, while the lower end of the hinge pillar 84 is joined or welded to the front edge of the side sill 82. The front pillar 83 and the hinge pillar 84 are both closed cross-sectional members (vehicle-body rigid members) respectively having a closed cross-sectional space 83s and a closed cross-sectional space 84s extending in their longitudinal direction (the up-down direction).

The side sill 82 and the roof rail 2 are connected at their respective intermediate portions in the vehicle front-rear direction by a center pillar 1 extending in the up-down direction between these intermediate portions.

The center pillar 1 particularly includes a pillar outer panel 10 with a hat shape opened toward the vehicle-width inner side in cross section perpendicular to the up-down direction, and a generally flat plate-like pillar inner panel 11. The center pillar 1 is configured to have therein a closed cross-sectional space 10s extending in the up-down direction by joining or welding respective front-edge flanges 10f and 11f of the pillar outer panel 10 and the pillar inner panel 11 to each other, and by joining or welding respective rear-edge flanges 10r and 11r of the pillar outer panel 10 and the pillar inner panel 11 to each other.

At the rear of the side sill 82, a rear wheel well (or wheel house) 85 is disposed. The rear wheel well 85 is formed into an arch shape protruding upward when viewed from the side of the vehicle such that it is possible to accommodate a rear wheel from above. The rear wheel well 85 includes a rear wheel well inner 86 and a rear wheel well outer 87, in which a front lower end 87a of the rear wheel well outer 87 is connected/joined to the rear edge of the side sill 82.

Above the rear wheel well 85, a rear pillar 7 is provided and extends obliquely downward from the rear edge of the roof rail 2 toward the rear direction. That is, the front upper end of the rear pillar 7 is joined or welded to the rear edge of the roof rail 2. Note that the rear lower end of the rear pillar 7 is joined or welded to the vehicle-width outer end of a rear end panel (not illustrated) extending in the vehicle width direction at the vehicle-body rear part.

When viewed from the side of the vehicle body, between the rear wheel well 85 and the rear pillar 7, a side inner panel 88 is disposed and forms the side wall of a trunk. The side inner panel 88 is disposed with its lower portion interposed between the rear wheel well inner 86 and the rear wheel well outer 87. The peripheral edge of the rear wheel well 85 (mainly the upper part and the front part), except the lower part, is joined to the side inner panel 88.

As illustrated in FIG. 1, the side sill 82 and the roof rail 2 are connected by an intermediate pillar 4 (quarter pillar) extending in the up-down direction at a rearward position relative to the center pillar 1.

The lower end portion of the intermediate pillar 4 is joined to the rear wheel well outer 87 at the front relative to its top portion 87t. Further, a gusset 41, included in the intermediate pillar 4 at its lower end portion, extends downward toward the front direction along the front edge of the rear wheel well outer 87, and is joined or welded to the rear edge of the side sill 82.

The intermediate pillar 4 particularly includes an intermediate-pillar outer panel 42 with a hat shape opened toward the vehicle-width inner side when viewed in cross section perpendicular to the up-down direction (the longitudinal direction). The intermediate pillar 4 defines a closed cross-sectional space 4s extending in the up-down direction between the intermediate pillar 4 and the front portion of the side inner panel 88.

As illustrated in FIG. 1, in front of the center pillar 1 on the vehicle-body side part, a door opening portion 90F for a front-seat passenger to board and/or deboard the vehicle is formed by being surrounded by the center pillar 1, the front pillar 83, the hinge pillar 84, the roof rail 2, and the side sill 82.

Behind or at the rear of the center pillar 1 on the vehicle-body side part, a door opening portion 90R for a rear-seat passenger to board and/or deboard the vehicle is formed by being surrounded by the center pillar 1, the front edge of the rear wheel well 85 and the intermediate pillar 4, the roof rail 2, and the side sill 82.

Although not illustrated, the door opening portion 90F for a front-seat passenger to board and deboard the vehicle is configured to be opened/closed by a front door, while the door opening portion 90R for a rear-seat passenger to board and deboard the vehicle is configured to be opened/closed by a rear side door. Both the front side door and the rear side door include a door impact bar (not illustrated) extending in the vehicle front-rear direction so as to connect the front door edge corresponding to the front side door and the rear door edge corresponding to the rear side door.

The roof portion 20 is particularly provided with a front header 26 and a rear header 27 that connect the roof rails 2 provided on both sides of the roof portion 20 to each other in the vehicle width direction at both the front and rear ends of the roof rails 2.

Between the front header 26 and the rear header 27 in the vehicle front-rear direction, more or a plurality of roof reinforcements 3 are spaced apart from each other in the vehicle front-rear direction, and are provided approximately in parallel to each other. The opposite outer-side ends of the roof reinforcements 3 in the vehicle width direction are joined to their corresponding right-side and left-side roof rails 2. Further, the roof portion 20 is particularly provided with the roof panel 28 (see FIG. 6(B)) that covers the front header 26, the rear header 27, and the roof reinforcements 3 from above. The roof panel 28 will be described later.

A joined portion (or a connection portion) C3f between the roof rail 2 and a front-side roof reinforcement 3f, which is one of a plurality of (two in this example) roof reinforcements 3 (3f and 3r), approximately aligns with a joined portion (or a connection portion) C1 between the roof rail 2 and the center pillar 1 in the vehicle front-rear direction.

Note that the vehicle particularly includes a side outer panel 9 (see FIG. 6(B)) on its side part as an exterior component of the side part. The side outer panel 9 is a panel mounted in such a manner as to cover the side part of the vehicle, specifically, cover at least the roof rail 2, the side sill 82, the front pillar 83, the hinge pillar 84, the center pillar 1, and the intermediate pillar 4 integrally from the vehicle-width-direction outer side. The side outer panel 9 is formed from a sheet of steel plate by press-molding the sheet into a predetermined shape, and stamping out the sheet at the positions corresponding to the front and rear door opening portions 90F and 90R.

Next, the structure of relevant parts of the roof rail 2, the rear-side roof reinforcement 3r, and the intermediate pillar 4, and the structure of a joined portion (or a connection portion) C3r of the rear-side roof reinforcement 3r to the roof rail 2 and a joined portion (or a connection portion) C4 of the intermediate pillar 4 to the roof rail 2 are described in detail.

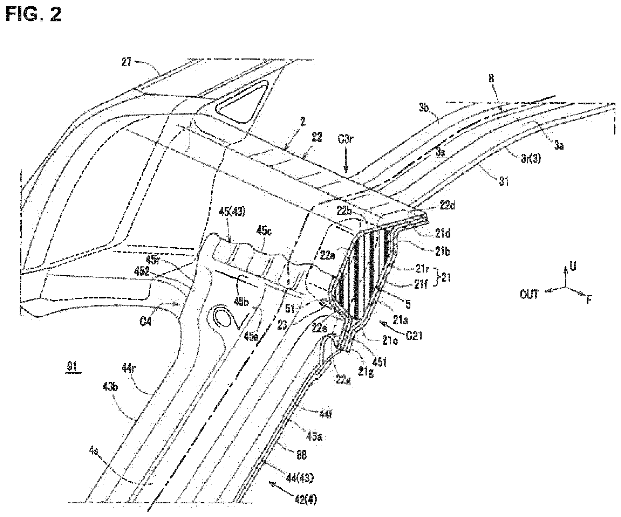

FIG. 2 is an enlarged cross-sectional view of the relevant parts taken along the line A-A in FIG. 1.

As illustrated in FIG. 2, the roof rail 2 particularly includes a roof rail inner 21, and a roof rail outer 22 positioned above the roof rail inner 21 on the vehicle-width outer side relative to the roof rail inner 21. The roof rail inner 21 out of these components includes a front-side roof rail inner 21f, and a rear-side roof rail inner 21r with its front edge joined to the rear edge of the front-side roof rail inner 21f.

The roof rail inner 21 (the front-side and rear-side roof rail inners 21f and 21r) is formed into a single piece with a generally hat shape opened upward toward the vehicle-width outer side in cross section perpendicular to the longitudinal direction by a lower wall 21a, an inner wall 21b extending upward from the vehicle-width inner end of the lower wall 21a toward the vehicle-width inner side, an inner-end flange 21d extending downward from the upper end of the inner wall 21b toward the vehicle-width inner side, an outer wall 21e extending upward from the vehicle-width outer end of the lower wall 21a toward the vehicle-width outer side, and an outer-end flange 21g extending downward from the upper end of the outer wall 21e toward the vehicle-width outer side.

The roof rail outer 22 is particularly formed into a single piece with a generally hat shape (a generally G-shape) opened downward toward the vehicle-width inner side in cross section perpendicular to the longitudinal direction by an upper wall 22a, an inner wall 22b extending downward from the vehicle-width inner end of the upper wall 22a toward the vehicle-width inner side, an inner-end flange 22d extending downward from the lower end of the inner wall 22b toward the vehicle-width inner side, an outer wall 22e extending downward from the vehicle-width outer end of the upper wall 22a toward the vehicle-width outer side, and an outer-end flange 22g extending downward from the lower end of the outer wall 22e toward the vehicle-width outer side.

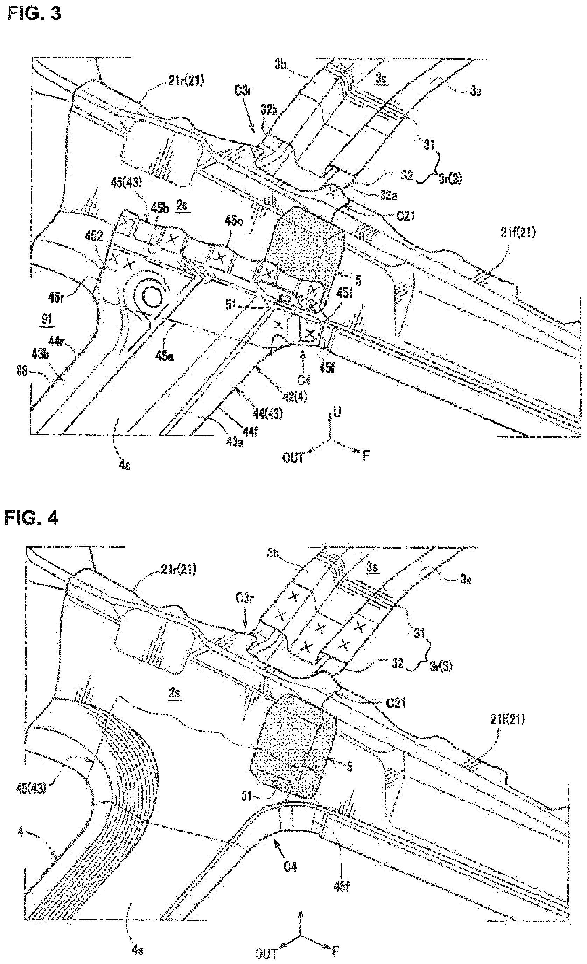

The roof rail 2 defines therein the closed cross-sectional space 2s (see FIGS. 3 and 4) extending in the vehicle front-rear direction particularly by joining or welding the respective inner-end flanges 21d and 22d of the roof rail inner 21 and the roof rail outer 22 to each other, and joining or welding the respective outer-end flanges 21g and 22g of the roof rail inner 21 and the roof rail outer 22 to each other by spot welding over a plurality of spots in the vehicle front-rear direction.

As illustrated in FIG. 1, the intermediate-pillar outer panel 42 includes, at its upper portion, an intermediate-pillar outer upper panel 43 (hereinafter, abbreviated as "intermediate-pillar upper 43") that serves as an upper-side intermediate pillar extending obliquely downward toward the rear to constitute the front side of an opening portion 91 for a quarter window. The intermediate-pillar upper 43 is formed into a single piece by an intermediate-pillar upper body portion 44 extending along the front side of the opening portion 91 for a quarter window, and an intermediate-pillar wider upper portion 45 joined or welded to the roof rail 2 by spot welding or the like. The intermediate-pillar wider upper portion 45 is formed to protrude upward and become wider toward the vehicle front side and the vehicle rear side relative to the upper end of the intermediate-pillar upper body portion 44.

FIG. 3 is an enlarged diagram of the joined portion C3r of the rear-side roof reinforcement 3r to the roof rail 2, and the joined portion C4 of the intermediate pillar 4 to the roof rail 2 in FIG. 1, and around these joined portions C3r and C4. FIG. 3 illustrates the enlarged diagram with the roof rail outer 22 removed.

As illustrated in FIG. 3, the intermediate-pillar wider upper portion 45 of the intermediate-pillar upper 43 particularly has a front-side extending portion 451 at the front part of the intermediate-pillar wider upper portion 45. The front-side extending portion 451 extends forward relative to a front edge 44f of the intermediate-pillar upper body portion 44. The intermediate-pillar wider upper portion 45 also has a rear-side extending portion 452 at the rear part of the intermediate-pillar wider upper portion 45. The rear-side extending portion 452 extends rearward relative to a rear edge 44r of the intermediate-pillar upper body portion 44. That is, in the intermediate-pillar wider upper portion 45 of the intermediate-pillar upper 43, a front edge 45f is positioned forward relative to the front edge 44f of the intermediate-pillar upper body portion 44, and a rear edge 45r is positioned rearward relative to the rear edge 44r of the intermediate-pillar upper body portion 44.

An upper-end flange 45c is formed at the upper end of the intermediate-pillar wider upper portion 45 in its entirety in the vehicle front-rear direction. A front-edge flange 43a formed along the front edge of the intermediate-pillar upper 43 extends continuously from the front edge 44f of the intermediate-pillar upper body portion 44 to the front-side extending portion 451 of the intermediate-pillar wider upper portion 45. A rear-edge flange 43b formed along the rear edge of the intermediate-pillar upper 43 extends continuously from the rear edge 44r of the intermediate-pillar upper body portion 44 to the rear-side extending portion 452 of the intermediate-pillar wider upper portion 45.

In other words, as illustrated in FIG. 3, the intermediate-pillar wider upper portion 45 of the intermediate-pillar upper 43 particularly includes a base portion 45a extending upward from the upper end of the intermediate-pillar upper body portion 44 toward the vehicle-width inner side. Also, the intermediate-pillar wider upper portion 45 is formed with the upper-end flange 45c extending upward from the upper end of the base portion 45a through a vertical-wall-like step portion 45b toward the vehicle-width inner side.

As illustrated in FIGS. 2 and 3, in the intermediate-pillar wider upper portion 45, the upper-end flange 45c is particularly joined or welded to the upper wall 22a of the roof rail outer 22, while the front-side extending portion 451 and the rear-side extending portion 452 in the base portion 45a are joined or welded to the outer-end flange 22g of the roof rail outer 22 (see "×" in FIG. 3). As such, the intermediate-pillar wider upper portion 45 is joined or welded to the roof rail outer 22 such that the inner surface of the step portion 45b butts against the outer wall 22e of the roof rail outer 22 from the vehicle-width-direction outer side from below, as illustrated in FIG. 2.

FIG. 4 is a perspective view with the intermediate-pillar upper 43 in FIG. 3 removed. FIG. 5 is a perspective view of the joined portion C3r of the roof rail 2 with the rear-side roof reinforcement 3r, and the joined portion C4 of the roof rail 2 with the intermediate pillar 4 when viewed from below.

As illustrated in FIGS. 3 to 5, the rear-side roof reinforcement 3r particularly includes a roof reinforcement body portion 31 and a gusset 32. The gusset 32 is joined at its vehicle-width inner end to the vehicle-width outer end of the roof reinforcement body portion 31 particularly by spot welding or the like (see "×" in FIG. 4).

The roof reinforcement body portion 31 and the gusset 32 are both formed into a hat shape opened upward when viewed in cross section perpendicular to the vehicle width direction (the longitudinal direction). The rear-side roof reinforcement 3r has a front-edge flange 3a on its front side, and a rear-edge flange 3b on its rear side. The respective upper surfaces of the front-edge flange 3a and the rear-edge flange 3b are fixed to the lower surface of the roof panel 28 using an adhesive (not illustrated). The rear-side roof reinforcement 3r defines a closed cross-sectional space 3s extending in the vehicle width direction between the front-edge and rear-edge flanges 3a and 3b in cooperation with the roof panel 28 (see FIG. 6(B)).

As illustrated in FIG. 5, the rear-side roof reinforcement 3r is joined or welded to the rear part of the roof rail inner 21.

Specifically, the front edge and the rear edge of the gusset 32 are both joined to the inner-end flange 21d of the roof rail inner 21 from the vehicle-width inner side from below by spot welding (see "×" in FIGS. 3 and 5). Further, on the front edge, the rear edge, and the lower edge of the gusset 32 at its vehicle-width outer end, a front-edge flange 32f, a rear-edge flange 32r, and a lower-edge flange 32d are formed, respectively. Each of the flanges 32f, 32r, and 32d is joined to the lower wall 21a of the roof rail inner 21 from its vehicle-width inner side by spot welding (see "×" in FIGS. 3 and 5).

As illustrated in FIGS. 1 to 5, 6(A), and 6(B), the joined portion C3r between the roof rail 2 and the rear-side roof reinforcement 3r approximately aligns with the joined portion C4 between the roof rail 2 and the intermediate pillar 4 in the vehicle front-rear direction.

In this example, as illustrated in FIGS. 3 and 5, the gusset 32 of the rear-side roof reinforcement 3r is particularly formed smaller in width in the vehicle front-rear direction than the intermediate-pillar wider upper portion 45 of the intermediate pillar 4. The front edge 32a of the gusset 32 of the rear-side roof reinforcement 3r is positioned rearward relative to (or behind) the front edge 45f of the intermediate-pillar wider upper portion 45. The rear edge 32b of the gusset 32 of the rear-side roof reinforcement 3r is positioned forward relative to the rear edge 45r of the intermediate-pillar wider upper portion 45.

As illustrated in FIGS. 2 to 5, in the closed cross-sectional space 2s, at a section corresponding to at least a part of the joined portion C4 of the roof rail 2 with the intermediate pillar 4 in the longitudinal direction of the roof rail 2, a foamed element, particularly a high-rigidity foamed element 5 (hereinafter, referred to as "foamed element 5") is disposed. Particularly the formed element 5 is disposed to serve as a deformation suppression member that suppresses a change in shape of the roof rail 2 in cross section perpendicular to the longitudinal direction of the roof rail 2.

As the foamed element 5, particularly a hard, high-strength foam resin is used. Specifically, a polyurethane resin, epoxy resin, or other type of resin is used which is foamed (expanded) by heat, and has, for example, a three-fold or less foaming factor.

As illustrated in FIG. 2, the foamed element 5 is almost filled in the closed cross-sectional space 2s of the roof rail 2 when viewed in cross section perpendicular to the vehicle front-rear direction, so that a change in shape of the roof rail 2 in cross section perpendicular to the longitudinal direction is suppressed at a location where the foamed element 5 is provided, and at the front and rear periphery of the location.

In this example, the foamed element 5 is disposed in the closed cross-sectional space 2s corresponding to the front-side section of the joined portion C4 of the roof rail 2 with the intermediate pillar 4 in the longitudinal direction.

In other words, the foamed element 5 is particularly disposed so as to at least partially overlap with the joined portion C4 of the roof rail 2 with the intermediate pillar 4 in the longitudinal direction.

More specifically, as illustrated in FIG. 3, in the longitudinal direction of the roof rail 2, between the rear edge 32b of the joined portion C3r of the rear-side roof reinforcement 3r (the rear edge 32b of the gusset 32 of the rear-side roof reinforcement 3r) and the front edge 45f of the joined portion C4 with the intermediate pillar 4 (the front edge 45f of the intermediate-pillar wider upper portion 45), the foamed element 5 is disposed to extend forward and rearward relative to the front edge 32a of the joined portion C3r with the rear-side roof reinforcement 3r (the front edge 32a of the gusset 32 of the rear-side roof reinforcement 3r). In other words, the foamed element 5 is disposed to extend beyond the front edge 32a of the joined portion C3r in the vehicle front-back direction.

That is, in the longitudinal direction of the roof rail 2, the foamed element 5 is provided in such a manner as to be at least partially overlapped on the joined portion C3r with the rear-side roof reinforcement 3r and on the joined portion C4 with the intermediate pillar 4.

In the closed cross-sectional space 2s of the roof rail 2, at a location where the foamed element 5 is provided, the foamed element 5 is in a state of being attached to a panel-like wall that constitutes the roof rail 2, in this example, the outer wall 22e of the roof rail outer 22.

Specifically, the foamed element 5 before being foamed is formed like a plate, and one end portion (base end portion) of the plate is formed with an engagement piece 51 (see FIGS. 2 to 4) protruding from the one end portion. In contrast, at the attachment location for the foamed element 5 on the inner surface of the outer wall 22e of the roof rail outer 22, an engagement hole 23 (see FIG. 2) is formed as a through hole into which the engagement piece 51 can be inserted.

In a vehicle-body production process, a painting process of electropainting an electrodeposition liquid on the vehicle body is performed after a vehicle-body assembling process. After the electropainting process in which the vehicle body is immersed in this electrodeposition liquid, a drying process is performed in which the vehicle body is led into a heating furnace and is heated at a predetermined temperature for a given time in order to dry the electrodeposition liquid.

In this example, in the vehicle-body assembling process, the engagement piece 51 included in the base end portion of the plate-like foamed element 5 before being foamed is inserted into the engagement hole 23 provided at the attachment location for the foamed element 5, for example, on the outer wall 22e of the roof rail outer 22, and thus the engagement piece 51 is engaged with the peripheral edge of the engagement hole 23. The foamed element 5 before being foamed is thereby attached to the above attachment location on the roof rail outer 22 in such a manner as to face the closed cross-sectional space 2s. In the drying step, heat of the drying furnace is used to foam (expand) the foamed element 5, and this brings the foamed element 5 into press-contact (close-contact) with the surface of the roof rail 2, which defines the closed cross-sectional space 2s.

As illustrated in FIGS. 2 and 3, the foamed element 5 is provided with its front edge positioned rearward relative to (or behind) the front edge of the intermediate-pillar wider upper portion 45 of the intermediate pillar 4, as described above. Thus, the foamed element 5 in its entirety in the vehicle front-rear direction is disposed so as to be covered from the vehicle-width outer side by the intermediate-pillar wider upper portion 45 (mainly the front-side extending portion 451) through the roof rail outer 22.

As illustrated in FIGS. 2 to 5, a joined portion C21 between the front-side roof rail inner 21 and the rear-side roof rail inner 21r is positioned between the front edge 45f of the intermediate-pillar wider upper portion 45 (the front edge 45f of the joined portion C4 of the intermediate pillar 4 with the roof rail 2) and the front edge 32a of the gusset 32 of the rear-side roof reinforcement 3r (the front edge 32a of the joined portion C3r of the rear-side roof reinforcement 3r with the roof rail 2) in the vehicle front-rear direction.

The foamed element 5 is provided in the vehicle front-rear direction so as to extend across the joined portion C21 between the front-side roof rail inner 21f and the rear-side roof rail inner 21r.

As illustrated in FIG. 3, the joined portion C21 between the front-side roof rail inner 21 and the rear-side roof rail inner 21r is positioned rearward relative to the front edge 45f of the intermediate-pillar wider upper portion 45 and forward relative to (or in front of) the front edge 44f of the intermediate-pillar upper body portion 44. In other words, the joined portion C21 is positioned across the front-side extending portion 451 of the intermediate-pillar wider upper portion 45 in the vehicle front-rear direction.

Meanwhile, as illustrated in FIGS. 1 and 6(A), the rear part of the vehicle according to the present embodiment particularly includes, at its lower portion, a rear seat pan 92 on which a rear seat (not illustrated) is installed, and a rear floor panel 93 for forming the trunk or the boot. At the boundary portion between the rear seat pan 92 and the rear floor panel 93, a crossmember 94 is provided and defines therein a closed cross-sectional space extending in the vehicle width direction. As illustrated in FIGS. 1, 6(A), and 6(B), the rear seat pan 92 and the rear floor panel 93 are provided with a rear side frame 95 on both sides. The rear side frame 95 defines therein a closed cross-sectional space 95s (see FIG. 6(B)) extending in the vehicle front-rear direction.

The rear side frame 95 extends in the vehicle front-rear direction on the vehicle-interior side of the rear wheel well 85. The front edge portion of the rear side frame 95 is joined or welded to the rear portion of the side sill 82.

As illustrated in FIGS. 6(A) and 6(B), a vehicle-interior-side up-down-direction reinforcement member 6 extends in the up-down direction on the vehicle-interior side of the side portion of the rear part of the vehicle according to the present embodiment. The vehicle-interior-side up-down-direction reinforcement member 6 extends upward from the height position of the rear side frame 95 so as to extend across the upper peripheral edge of the rear wheel well inner 86 in the up-down direction. The vehicle-interior-side up-down-direction reinforcement member 6 has a closed cross-sectional space 6s extending in the up-down direction between the vehicle-interior-side up-down-direction reinforcement member 6, and the rear wheel well inner 86 as well as the side inner panel 88 (see FIG. 6(B)).

Further, as illustrated in FIG. 6(B), the vehicle-interior-side up-down-direction reinforcement member 6 extends upward along the side inner panel 88 to a height position corresponding to the lower end portion of the intermediate-pillar upper 43 provided on the vehicle-width outer side.

That is, the vehicle-interior-side up-down-direction reinforcement member 6 is connected at its upper end portion to the lower end portion of the intermediate-pillar upper 43 through the side inner panel 88.

As described above, the upper end of the intermediate-pillar upper 43 is connected to the rear-side roof reinforcement 3r through the roof rail 2 extending in the vehicle front-rear direction. In contrast, as illustrated in FIGS. 6(A) and 6(B), the vehicle-interior-side up-down-direction reinforcement member 6 is joined to the intermediate portion of the rear side frame 95 in the vehicle front-rear direction, and to the vehicle-width outer end of the crossmember 94 through a gusset 60 provided at the lower portion of the vehicle-interior-side up-down-direction reinforcement member 6 in the vehicle-body lower part.

In this manner, in the vehicle body, at a section corresponding to the joined portion C3r with the rear-side roof reinforcement 3r, and the joined portion C4 with the intermediate pillar 4 in the front-rear direction of the vehicle body, the roof rails 2 on both sides, the rear-side roof reinforcement 3r, the intermediate pillar 4 (the intermediate-pillar upper 43), the vehicle-interior-side up-down-direction reinforcement member 6, the rear side frame 95, and the crossmember 94 are disposed to serve as a plurality of closed cross-sectional members having therein their respective closed cross-sectional spaces.

As illustrated in FIGS. 1 and 6(B), in the vehicle body, at a section corresponding to the above joined portions C3r and C4 in the front-rear direction of the vehicle body, an annular structure 8 is made up of these closed cross-sectional members 2, 3, 4, 6, 94, and 95 so as to annularly surround a vehicle interior space when viewed from the front of the vehicle body.

The foamed element 5 is provided in or in the vicinity of a section of the roof rail 2 in the longitudinal direction, which constitutes a part of the annular structure 8 in the circumferential direction. In this example, the foamed element 5 is provided from a section of the roof reinforcement 3 in the vehicle front-rear direction, which constitutes a part of the annular structure 8, to the front vicinity of the section (see FIG. 3).

The vehicle-body structure or the upper vehicle-body structure for a vehicle according to the present embodiment described above is a vehicle-body structure or an upper vehicle-body structure for a vehicle (see FIG. 1), the structure including: the roof rail 2 included in the vehicle-body upper side part so as to constitute the side part of the roof portion 20 (roof) of the vehicle, the roof rail 2 having the closed cross-sectional space 2s (internal space) defined therein, the closed cross-sectional space 2s extending in a generally vehicle front-rear direction; the center pillar 1 serving as a first pillar extending downward from the roof rail 2; the intermediate pillar 4 serving as a second pillar extending downward from the roof rail 2 at a rearward position relative to the center pillar 1; and the rear-side roof reinforcement 3r (roof reinforcement) extending from the roof rail 2 toward a vehicle-width-direction inner side at a rearward position relative to the center pillar 1, wherein the vehicle-body structure or the upper vehicle-body structure includes, in the closed cross-sectional space 2s, the foamed element 5 serving as a deformation suppression member that suppresses a change in shape of the roof rail 2 in cross section perpendicular to a longitudinal direction of the roof rail 2 by coming into press-contact with a surface of the roof rail 2, the surface defining the closed cross-sectional space 2s, and in a longitudinal direction of the roof rail 2, between the rear edge 32b of the joined portion C3r of the roof rail 2 with the rear-side roof reinforcement 3r (that is, the rear edge 32b of the gusset 32) and the front edge 45f of the joined portion C4 of the roof rail 2 with the intermediate pillar 4 (that is, the front edge 45f of the intermediate-pillar wider upper portion 45), the foamed element 5 is provided over a region extending forward and rearward relative to the front edge 32a of the joined portion C3r of the roof rail 2 with the rear-side roof reinforcement 3r (that is, the front edge 32a of the gusset 32) (see FIGS. 2 and 3).

To be more specific, the foamed element 5 is provided continuously in a region extending forward and rearward relative to the front edge 32a of the joined portion C3r of the rear-side roof reinforcement 3r with the roof rail 2. Further, the foamed element 5 is provided in such a region that its rear edge is positioned forward relative to the rear edge 32b of the joined portion C3r of the rear-side roof reinforcement 3r with the roof rail 2, and its front edge is positioned rearward relative to the front edge 45f of the joined portion C4 of the intermediate pillar 4 with the roof rail 2.

At the time of a side collision, for example, a load input to the center pillar 1 is transmitted to the joined portion C3r of the roof rail 2 with the rear-side roof reinforcement 3r in some cases through a route directed rearward from the joined portion C1 of the roof rail 2 with the center pillar 1 in the longitudinal direction, or through a route directed upward from the door impact bar of the rear side door (not illustrated) along the intermediate pillar 4.

The joined portion C3r of the roof rail 2 with the rear-side roof reinforcement 3r corresponds to a section of the roof rail 2, which is supported by the rear-side roof reinforcement 3r. For example, the front of the joined portion C3r corresponds to a section of the roof rail 2, which extends forward from the joined portion C3r in a cantilevered manner without being supported by the rear-side roof reinforcement 3r. Due to this configuration, at the time of a side collision, when a side-collision load is transmitted to the joined portion C3r of the roof rail 2 with the rear-side roof reinforcement 3r as described above, there is a concern about breakage of the roof rail 2 at its unjoined portion (a portion immediately in front of the joined portion C3r) in the front vicinity of the joined portion C3r, that is, cross-sectional deformation of the roof rail 2 at its unjoined portion, caused by a stress that becomes concentrated between the joined portion C3r and the unjoined portion in front of the joined portion C3r due to the difference in rigidity therebetween.

To address this concern, the foamed element 5 is provided over a region extending forward and rearward relative to the front edge 32a of the joined portion C3r in the longitudinal direction of the roof rail 2 as described above. That is, the foamed element 5 connects the joined portion C3r on the rearward side relative to the front edge 32a of the joined portion C3r, and an easily breakable section (the unjoined portion) on the forward side relative to the front edge 32a of the joined portion C3r in the longitudinal direction of the roof rail 2. The joined portion C3r is supported by the rear-side roof reinforcement 3r and is thus highly rigid, while the easily breakable section is not supported by the rear-side roof reinforcement 3r and is thus easily breakable because a load is more likely to become concentrated on this section. Therefore, at the time of a side collision, cross-sectional deformation at the unjoined portion in the front vicinity of the joined portion C3r can be effectively suppressed against a load transmitted to the joined portion C3r of the roof rail 2 with the rear-side roof reinforcement 3r.

The foamed element 5 is pinpointed to only a necessary location that falls within the region between the rear edge 32b of the above joined portion C3r and the front edge 45f of the joined portion C4. Thus, the foamed element 5 can effectively suppress breakage of the roof rail 2 at the joined portion C3r with the rear-side roof reinforcement 3r caused by a load transmitted to the joined portion C3r of the roof rail 2 with the rear-side roof reinforcement 3r at the time of a side collision, while minimizing an increase in weight of the roof rail 2.

In accordance with an aspect of the present invention, the foamed element 5 is the high-rigidity foamed element 5 that is foamed by heat (FIGS. 2 to 4).

According to the above configuration, the high-rigidity foamed element 5 can be foamed using heat in the process of drying an electrodeposition liquid (painting agent) painted on the vehicle-body surface. Thus, while an increase in weight of the roof rail 2 is minimized, the high-rigidity foamed element 5 can be easily filled in the closed cross-sectional space 2s of the roof rail 2 in such a manner that the foamed element 5 comes into press-contact with the surface defining the closed cross-sectional space 2s.

In accordance with an aspect of the present invention, the joined portion C3r of the roof rail 2 with the rear-side roof reinforcement 3r aligns with the joined portion C4 of the roof rail 2 with the intermediate pillar 4 at least partially in the longitudinal direction of the roof rail 2 (see FIGS. 1 to 6), the vehicle body is provided with a plurality of the closed cross-sectional members 2, 3, 4, 6, 94, and 95 having therein the closed cross-sectional spaces 2s, 3s, 4s, 6s, 94s, and 95s (see FIG. 6(B)) respectively, and in and around a section where the joined portion C3r of the roof rail 2 with the rear-side roof reinforcement 3r aligns with the joined portion C4 of the roof rail 2 with the intermediate pillar 4 in a vehicle-body front-rear direction, the annular structure 8 is made up of the closed cross-sectional members 2, 3, 4, 6, 94, and 95 disposed so as to annularly surround the vehicle-interior space when viewed from the front of the vehicle body (see FIGS. 1 and 6(B)), and the foamed element 5 can be provided in or in the vicinity of a section of the roof rail 2 in the longitudinal direction, which constitutes a part of the annular structure 8 (see FIG. 2).

According to the above configuration, the foamed element 5 is provided in or in the vicinity of a section of the roof rail 2 in the longitudinal direction, which constitutes a part of the annular structure 8, so that the foamed element 5 can suppress cross-sectional deformation at the section of the roof rail 2 in the longitudinal direction. This can contribute to improvement in rigidity of the annular structure 8.

In accordance with an aspect of the present invention, the intermediate pillar 4 can include the intermediate-pillar upper 43 (mainly the front-side extending portion 451 of the intermediate-pillar wider upper portion 45) serving as a second-pillar outer panel in a joined portion with the roof rail 2 at least from the front edge to the rear edge of the foamed element 5 on a vehicle-width-direction outer side relative to the foamed element 5 (see FIG. 3).

According to the above configuration, the intermediate-pillar upper 43 can be provided so as to cover the foamed element 5 in its entirety in the vehicle front-rear direction from the vehicle-width outer side mainly by the intermediate-pillar wider upper portion 45 of the intermediate-pillar upper 43. Therefore, at the time of a side collision, for example, a side-collision load input to the center pillar 1 and transmitted from the intermediate-pillar wider upper portion 45 included in the intermediate-pillar upper 43 of the intermediate pillar 4 to the roof rail 2 via the door impact bar of the rear side door can be received by the foamed element 5 in its entirety in the vehicle front-rear direction. The foamed element 5 can thus suppress cross-sectional deformation of a section of the roof rail 2 in the longitudinal direction corresponding to the joined portion C4 with the intermediate pillar 4.

In accordance with an aspect of the present invention, the roof rail 2 includes the front-side roof rail inner 21f (front-side roof-rail constituent member), and the rear-side roof rail inner 21r (rear-side roof-rail constituent member) with a front edge thereof joined to a rear edge of the front-side roof rail inner 21f (see FIGS. 2 to 5), and the vehicle-body structure or the upper vehicle-body structure can include the foamed element 5 at a position corresponding to the joined portion C21 of the front-side roof rail inner 21f and the rear-side roof rail inner 21r in the longitudinal direction of the roof rail 2 such that the foamed element 5 extends across the joined portion C21 in the vehicle front-rear direction (see FIGS. 2 to 5).

According to the above configuration, the foamed element 5 is disposed so as to extend across the joined portion C21 between the front-side roof rail inner 21f and the rear-side roof rail inner 21r in the vehicle front-rear direction. Thus, the foamed element 5 can come into press-contact with the inner surface of the roof rail 2, which defines the closed cross-sectional space 2s, such that the rear edge of the front-side roof rail inner 21f and the front edge of the rear-side roof rail inner 21r overlap one another in the joined portion C21. Accordingly, at the time of a side collision, efficiency in transmitting and dispersing a side-collision load mutually between the front-side roof rail inner 21f and the rear-side roof rail inner 21r can be improved.

Note that the roof rail 2 is divided into, and made up of, at least the front-side roof rail inner 21f and the rear-side roof rail inner 21r in the vehicle front-rear direction. Thus, between the front-side and the rear-side roof rail inners 21f and 21r, and their opposed constituent member in the vehicle width direction, that is, the roof rail outer 22, an adequate number of joining spots for spot welding or the like are secured, while the joining spots are provided at appropriate places, and then the inner-end flanges 21d and 22d can be joined to each other, and the outer-end flanges 21g and 22g can be joined to each other.

As such, the constituent members of the roof rail 2 can be more firmly joined to a constituent member opposed to these constituent members in the vehicle width direction, as compared to the case where the roof rail 2 is formed of a single member along the vehicle front-rear direction.

The present invention is not limited to the configuration described in the above embodiment, but may be formed in various embodiments.

Specifically, the first pillar is not limited to the center pillar, but may be other pillars, for example, a front pillar as long as the first pillar extends downward from the roof rail at the front relative to the joined portion of this roof rail with the roof reinforcement (the rear-side roof reinforcement 3r).

That is, the vehicle-body structure or the upper vehicle-body structure according to the present invention may be applicable to a vehicle that does not have a center pillar.

A load to be transmitted to the joined portion of the roof rail with the roof reinforcement (the rear-side roof reinforcement 3r) at the time of a side collision is not limited to being based on the vehicle-width-direction inner side load input to the center pillar. The load may be based on any vehicle-width-direction inner side load input to the vehicle-body side part at the time of a side collision, such as a load to be transmitted from the second pillar to the roof rail not through the center pillar, or a load to be transmitted from the front relative to the joined portion of the roof rail with the roof reinforcement along the roof reinforcement to the joined portion with the roof reinforcement.

### Reference Signs List

1... Center pillar (First pillar)
2... Roof rail (Closed cross-sectional member)
2s... Closed cross-sectional space (Interior space)
2s, 3s, 4s, 6s, 94s, 95s... Closed cross-sectional space included in closed cross-sectional member
3r... Rear-side roof reinforcement (Roof reinforcement, Closed cross-sectional member)
4... Intermediate pillar (Second pillar)
5... High-rigidity foamed element (Deformation suppression member)
6... Vehicle-interior-side up-down-direction reinforcement member (Closed cross-sectional member)
8... Annular structure
20... Roof portion (Roof)
21f... Front-side roof rail inner (Front-side roof-rail constituent member)
21r... Rear-side roof rail inner (Rear-side roof-rail constituent member)
32a... Front edge of joined portion of rear-side roof reinforcement with roof rail (Front edge of connection portion of roof reinforcement with roof rail)
32b... Rear edge of joined portion of rear-side roof reinforcement with roof rail (Rear edge of connection portion of roof reinforcement with roof rail)
43... Intermediate-pillar outer upper panel (Second-pillar outer panel, Closed cross-sectional member)
45f... Front edge of joined portion of intermediate pillar with roof rail (Front edge of connection portion of second pillar with roof rail)
95... Rear side frame (Closed cross-sectional member)
94... Crossmember (Closed cross-sectional member)
C3r... Joined portion of rear-side roof reinforcement with roof rail (Connection portion of roof reinforcement with roof rail)
C4... Joined portion of rear-side roof reinforcement with intermediate pillar (Connection portion of roof reinforcement with second pillar)
C21... Joined portion between front-side roof rail inner and rear-side roof rail inner (Connection portion of front-side and rear-side roof-rail constituent members)

## Claims

1. A vehicle-body structure for a vehicle, the structure comprising:
a roof rail (2) included in a vehicle-body upper side part so as to constitute a side part of a roof (20) of the vehicle, the roof rail (2) having an internal space (2s) defined therein, the internal space (2s) extending generally in a vehicle front-rear direction;
a first pillar (1) extending downward from the roof rail (2) ;
a second pillar (4) extending downward from the roof rail (2) at a rearward position relative to the first pillar (1); and
a roof reinforcement (3r) extending from the roof rail (2) toward a vehicle-width-direction inner side at a rearward position relative to the first pillar (1), wherein
the vehicle-body structure includes, in the internal space (2s), a deformation suppression member (5) configured to suppress a change in shape of the roof rail (2) in cross section perpendicular to a longitudinal direction of the roof rail (2) by coming into press-contact with a surface of the roof rail (2), the surface defining the internal space (2s), and
in a longitudinal direction of the roof rail (2), between a rear edge (32b) of a connection portion (C3r) of the roof rail (2) with the roof reinforcement (3r) and a front edge (45f) of a connection portion (C4) of the roof rail (2) with the second pillar (4), the deformation suppression member (5) is provided over a region extending forward and rearward relative to a front edge (32a) of the connection portion (C3r) of the roof rail (2) with the roof reinforcement (3r).

2. The vehicle-body structure for a vehicle according to claim 1, wherein the deformation suppression member (5) is a high-rigidity foamed element that is foamed by heat.

3. The vehicle-body structure for a vehicle according to claim 1 or 2, wherein
the connection portion (C3r) of the roof rail (2) with the roof reinforcement (3r) is configured to align with the connection portion (C4) of the roof rail (2) with the second pillar (4) at least partially in a longitudinal direction of the roof rail (2).

4. The vehicle-body structure for a vehicle according to any one of the preceding claims, wherein
a vehicle body is provided with a plurality of closed cross-sectional members (2, 3, 4, 6, 94, 95) having therein closed cross-sectional spaces respectively, and
an annular structure (8) is made up of the closed cross-sectional members (2, 3, 4, 6, 94, 95) disposed so as to annularly surround a vehicle-interior space when viewed from front of the vehicle body.

5. The vehicle-body structure for a vehicle according to claim 4, wherein
the annular structure (8) is disposed at least partially in and/or around a section where the connection portion (C3r) of the roof rail (2) with the roof reinforcement (3r) aligns with the connection portion (C4) of the roof rail (2) with the second pillar (4) in a vehicle-body front-rear direction.

6. The vehicle-body structure for a vehicle according to claim 4 or 5, wherein
the roof rail (2), the roof reinforcement (3r), and the second pillar (4) are included in the closed cross-sectional members (2, 3, 4, 6, 94, 95).

7. The vehicle-body structure for a vehicle according to the any one of the preceding claims, wherein
the deformation suppression member (5) is provided in or in a vicinity of a section of the roof rail (2), the section constituting a part of the annular structure (8).

8. The vehicle-body structure for a vehicle according to any one of the preceding claims, wherein the second pillar (4) includes a second-pillar outer panel (43) in the connection portion (C4) with the roof rail (2) at least from a front edge to a rear edge of the deformation suppression member (5) on a vehicle-width-direction outer side relative to the deformation suppression member (5).

9. The vehicle-body structure for a vehicle according to any one of the preceding claims, wherein
the roof rail (2) includes a front-side roof-rail constituent member (21f), and a rear-side roof-rail constituent member (21r) with a front edge thereof connected to a rear edge of the front-side roof-rail constituent member (21f), and
the vehicle-body structure includes the deformation suppression member (5) at a position corresponding a connection portion (C21) of the front-side and rear-side roof-rail constituent members (21f, 21r) in a longitudinal direction of the roof rail (2) such that the deformation suppression member (5) extends across the connection portion (C21) in the vehicle front-rear direction.

10. A vehicle comprising the vehicle-body structure according to any one of the preceding claims 1 to 9.
